# FASCICULE DE BREVET EUROPEEN

(11) **EP 1 595 753 B1**
(45) Date de publication et mention de la délivrance du brevet: **25.07.2007**
(21) Numéro de dépôt: 04291223.8
(22) Date de dépôt: 12.05.2004
(51) Int. Cl.: B60R 21/231, B60R 21/213

(54) **Fixation de coussin gonflable latéral pour automobile**
Befestigung eines Kraftfahrzeugsairbags
Fixing of an airbag for a vehicle

(43) Date de publication de la demande: 16.11.2005
(73) Titulaire: KEY SAFETY SYSTEMS, INC., Sterling Heights, MI 48314 (US)
(72) Inventeur: Chevalier, Nicolas, 75005 Paris (FR)
(74) Mandataire: Kurtz, Laurent Charles Edmond

(56) Documents cités:
- GB-A- 2 309 942
- US-A- 5 899 486
- US-A1- 2003 006 590
- US-B1- 6 412 810

## Description

L'invention se rapporte au domaine de l'équipement de sécurité pour automobile.

Elle concerne plus particulièrement un coussin gonflable de sécurité latéral destiné à être fixé à l'intérieur de l'habitacle d'une automobile, au-dessus du niveau des portes et à proximité de la jonction entre les parois latérales internes de l'automobile et son plafond.

Les coussins gonflables de ce type sont en général prévus pour être repliés dans un minimum d'espace contre leurs propres fixations à l'habitacle.

Au repos, ces coussins gonflables forment ainsi un paquet longiligne compact fixé à la coque de l'automobile et généralement dissimulé sous un revêtement de finition.

En cas d'accident, ces coussins sont gonflés très rapidement de sorte à déployer une enveloppe gonflable et à la disposer entre les passagers et les parois latérales de l'automobile. Les chocs des passagers contre les montants des portes ou les vitres latérales peuvent ainsi être amortis.

On connaît de tels coussins de sécurité latéraux comportant une enveloppe gonflable reliée à un dispositif de gonflage se déclenchant en cas d'accident. Ces coussins disposent également d'une série de pattes de fixation disposées le long d'un bord d'attache du coussin et destinées à être vissées, agrafées ou maintenues à l'aide de clips contre les parois internes de l'habitacle.

Ces pattes de fixation, réparties régulièrement les unes à côté des autres le long dudit bord, sont proches les unes des autres pour pouvoir maintenir en toute sécurité le coussin lors de son gonflage.

On connaît également de tels coussins du document GB 2 309 942 A qui décrit un coussin gonflable selon le préambule de la revendication 1.

Le but de l'invention est d'améliorer un tel coussin, et plus généralement en ce qui concerne son maintien dans l'habitacle ainsi que son montage.

Elle propose à cet effet un coussin gonflable de sécurité pour automobiles, destiné à être fixé latéralement à l'intérieur de l'habitacle, au-dessus du niveau des portes de l'automobile, et comportant :
- une enveloppe gonflable ;
- des pattes de fixation solidaires de l'enveloppe gonflable et espacées sur un premier bord du coussin gonflable, ce premier bord comportant une première face destinée à être disposée contre la paroi de l'habitacle ;
ledit coussin gonflable étant adapté à admettre une position d'attente dans laquelle l'enveloppe gonflable n'est pas sous pression et est maintenue repliée au niveau de la fixation du coussin à l'habitacle, et une position déployée dans laquelle l'enveloppe gonflable est remplie d'un gaz et est déployée au moins partiellement le long des parois latérales internes de l'automobile,
ledit coussin gonflable ayant :
- une première patte de fixation et une deuxième patte de fixation, éloignées l'une de l'autre le long du premier bord du coussin gonflable ;
- un fil rattaché à la première et à la deuxième patte de fixation et reliant lesdites pattes entre-elles
- ledit coussin gonflable étant caractérisé en ce que le fil comporte, au niveau de chaque patte de fixation, une portion rigide recourbée adaptée à coopérer avec des moyens d'attache du coussin à l'habitacle de l'automobile.

Le coussin gonflable de sécurité conforme à l'invention peut ainsi être fixé à l'habitacle d'une automobile simplement par deux pattes de fixation. L'invention permet de s'affranchir du grand nombre de pattes de fixation nécessaires pour fixer de manière rectiligne un bord d'attache souple sur une surface rigide.

Les pattes de fixation et le fil sont ainsi reliés par l'intermédiaire de moyens d'attache du coussin à l'habitacle de l'automobile.

Par ailleurs, le fil permet le maintien rectiligne du bord d'attache et une flexion limitée de ce bord d'attache, ce qui permet notamment d'amortir le choc provoqué par l'ouverture de l'enveloppe gonflable lors du déclenchement du coussin gonflable.

Un tel montage rapide et sûr permet une baisse du coût de fabrication et d'assemblage du coussin gonflable à l'automobile ainsi qu'une meilleure tenue dans le temps de ce coussin gonflable.

Selon une caractéristique préférée de l'invention, les première patte et deuxième patte de fixation sont situées chacune respectivement à proximité d'une des extrémités du premier bord du coussin gonflable.

Cette disposition permet au fil de couvrir toute la longueur du bord d'attache.

Au moins l'une desdites pattes de fixation peut comporter un trou de fixation adapté à recevoir des moyens d'attache du coussin à l'habitacle de l'automobile.

Par ailleurs, une extrémité du fil peut entourer un trou de fixation.

La portion de fil entourant le trou de fixation est adapté à coopérer avec des moyens d'attache du coussin à l'habitacle comme exposé précédemment.

De plus, le trou de fixation d'au moins l'une desdites pattes de fixation peut comporter un oeillet rigide serti sur la patte de fixation et disposé transversalement au fil.

Selon un autre mode de réalisation, le coussin comporte en outre une troisième patte de fixation disposée entre ladite première patte de fixation et ladite deuxième patte de fixation.

Cette patte de fixation supplémentaire permet au fil de ne pas fléchir en son milieu, notamment lorsque le bord d'attache est d'une longueur importante.

Selon une caractéristique préférée, la troisième patte de fixation est rattachée à l'enveloppe gonflable.

La troisième patte de fixation peut également être rattachée au fil.

Par ailleurs, le coussin peut comporter en outre des moyens d'attache dudit premier bord de l'enveloppe gonflable au fil, lesdits moyens d'attache pouvant comporter au moins un ourlet rattaché au premier bord de l'enveloppe gonflable et formant un passant dans lequel le fil est inséré.

La différence entre la longueur du fil et l'écartement des pattes de fixation peut être telle que le fil est mis en tension lorsqu'il est fixé à l'habitacle par des moyens d'attache du coussin à l'habitacle.

Le fil peut présenter une force de tension comprise entre 10 et 100 Newton.

Au moins une des pattes de fixation peut comporter une languette formée par une prolongation des parois de l'enveloppe gonflable.

Par ailleurs, l'enveloppe gonflable peut comporter deux épaisseurs superposées formant les parois de l'enveloppe et chacune de ces épaisseurs peut comporter au moins une excroissance latérale, au moins l'une des pattes de fixation étant formée par la superposition de deux de ces excroissances appartenant respectivement à chacune desdites épaisseurs.

Lesdites excroissances superposées peuvent être serties par un oeillet comportant en son centre un trou de fixation.

Le fil peut coopérer à chacune de ses extrémités, en étant disposé entre lesdites excroissances superposées, avec ledit oeillet.

Le coussin peut comporter de plus, le long de la première face dudit premier bord, un adhésif destiné à former une fixation supplémentaire à l'automobile.

En ce qui concerne le fil, celui-ci peut être constitué notamment d'une barre d'acier ou d'un câble d'acier.

D'autres caractéristiques et avantages de l'invention apparaissent à la lumière de la description qui va suivre d'un mode de réalisation préféré donné à titre d'exemple non limitatif, description faite en référence aux dessins annexés dans lesquels :
- la figure 1 est une vue en perspective d'un coussin gonflable de sécurité selon une forme de réalisation de l'invention, ce coussin étant dans sa position repliée ;
- la figure 2 est une vue similaire à la figure 1, le coussin gonflable laissant apparaître le fil et étant dans sa position déployée, avant gonflage ;
- la figue 3 est une vue similaire à la figure 2 et représente une variante dans laquelle le coussin gonflable comporte une patte de fixation centrale ;
- la figure 4 est une vue en perspective latérale de l'intérieur d'une automobile et montrant la disposition d'un coussin gonflable à l'intérieur de l'habitacle, ce coussin gonflable étant en position d'attente ;
- la figure 5 est une vue similaire à la figure 4, le coussin gonflable étant en position déployée et gonflé.

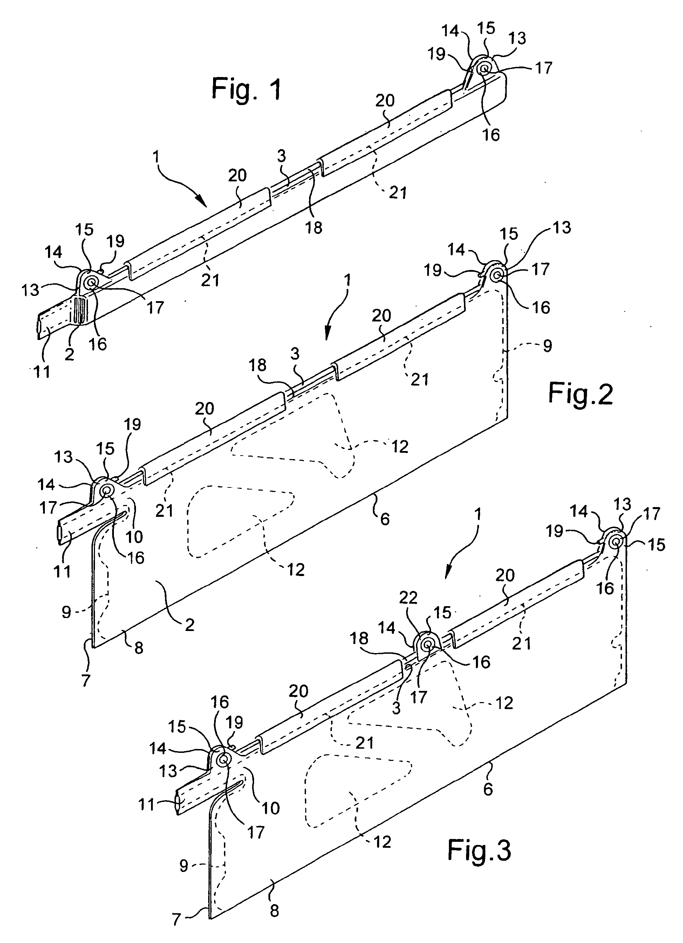

Les figures 1 et 2 représentent un coussin gonflable 1 selon une forme de réalisation de l'invention, destiné à être monté dans un véhicule non illustré.

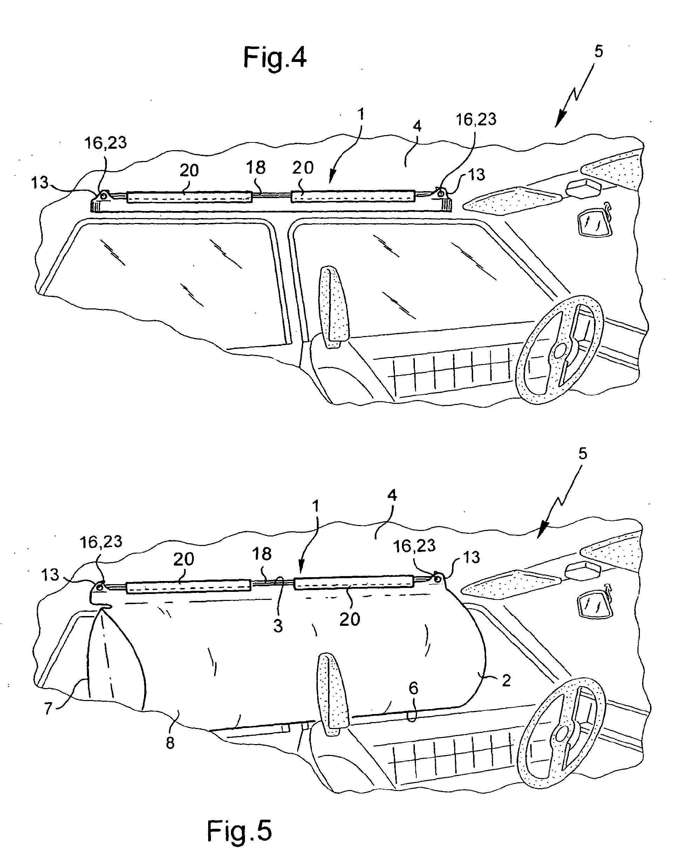

Ce coussin gonflable 1 comporte une enveloppe gonflable 2 qui, à l'une de ses extrémités, forme un bord d'attache 3 destiné à être fixé contre les parois internes de l'habitacle 4 d'une automobile 5 (voir figure 4).

La figure 1 montre le coussin gonflable 1 replié, dans une position dite d'attente, tandis que la figure 2 le montre dans une position déployée mais non encore gonflé.

En référence à la figure 2, le coussin gonflable 1 est formé d'une feuille de matériau souple étanche tel qu'utilisé couramment dans ce type d'application, par exemple un textile non tissé ou un textile tissé enduit de silicone, repliée sur elle-même le long d'un pli de fond 6.

Cette feuille de matériau souple forme ainsi deux épaisseurs 7, 8 superposées.

De manière à former l'enveloppe gonflable 2, les deux épaisseurs 7, 8 sont solidarisées le long des bords de ladite feuille, par exemple par des coutures 9 enduites ou par des lignes de soudure.

L'enveloppe gonflable ainsi formée est étanche au gaz destiné à la remplir, à l'exception d'un passage libre 10 relié à une conduite 11 formée de la même manière que l'enveloppe gonflable 2.

Cette conduite 11 est reliée à une cartouche pyrotechnique (non représentée) apte à dégager un volume de gaz pour gonfler l'enveloppe gonflable 2, en un temps très court, lorsqu'un choc contre le véhicule est détecté.

Les dispositifs de cartouches pyrotechniques étant bien connus dans le domaine des coussins gonflables de sécurité, de même que les dispositifs de pilotage de ces cartouches pyrotechniques et de détection des chocs du véhicule, ces dispositifs ne seront pas décrits plus en détail ici.

Leur fonction consiste d'une part à injecter par le conduit 11, au moment du choc, une grande quantité d'un gaz en très peu de temps pour gonfler l'enveloppe 2 et consiste d'autre part à permettre le dégonflage de l'enveloppe 2 au moment voulu.

Par ailleurs, des motifs peuvent être délimités au sein de l'enveloppe gonflable à l'aide de coutures ou de soudures linéaires semblables à celle 9 des bords de la feuille de matériau souple. Il s'agit, dans la présente réalisation, de deux motifs 12 sensiblement triangulaires définissant des zones qui ne seront pas gonflées par le gaz sous pression de sorte à limiter l'épaisseur et à donner de la tenue au coussin gonflable 1 une fois gonflé.

En référence à la figure 2, le coussin gonflable 1 comporte deux pattes de fixation latérales 13 éloignées l'une de l'autre et de préférence disposées chacune à une extrémité du bord d'attache 3. Ces pattes de fixation 13 peuvent comporter tout élément souple ou rigide rattaché au bord d'attache 3 et sont ici constituées chacune par deux languettes 14, 15 superposées, chacune de ces languettes 14, 15 étant formée d'une excroissance de l'épaisseur 7, 8 correspondante.

Pour chacune des pattes de fixation 13, les deux languettes 14, 15, appartenant respectivement à chacune des épaisseurs 7, 8 sont ainsi disposées en vis-à-vis l'une de l'autre et sont de plus solidarisées, par exemple par un rivet 16.

Ce rivet 16 traverse de part en part la patte de fixation considérée en maintenant rigidement les deux languettes 14, 15 l'une par rapport à l'autre.

Tel qu'illustré, le rivet 16 comporte en outre un trou central 17 traversant de sorte à former un oeillet perforé au sein de la patte de fixation 13. Notons que les languettes 14, 15 de chaque patte de fixation 7, 8 sont retenues l'une par rapport à l'autre à proximité du rivet 16. Autour du rivet 16, en revanche, les languettes sont libres de s'écarter légèrement, de par la souplesse du matériau les constituant, de façon qu'il soit possible d'y insérer un fil 18 comme exposé ci-dessous.

Le fil 18 est de préférence un fil d'acier flexible recourbé à ses deux extrémités. Chacune de ses extrémités forme ainsi un crochet 19 suffisamment rigide pour résister aux efforts provoqués par le gonflage de l'enveloppe gonflable 2. La rigidité du crochet 19 peut être accrue, au besoin, par un traitement thermique approprié ou par écrouissage.

Chacun de ces crochets 19 est inséré entre les deux languettes 14, 15 d'une même patte de fixation 13 et entoure le rivet 16. Plus précisément, chaque crochet 19 est positionné autour d'une partie du rivet 16 qui est cylindrique et transversale à la patte de fixation 13.

Le fil 18 est ainsi rendu solidaire en traction des pattes de fixation 13.

De plus, toujours en référence à la réalisation de la figure 2, le bord d'attache 3 est relié au fil 18 par deux ourlets 20. Chacun de ces ourlets 20 est formé d'un rabat rectangulaire en prolongement par rapport aux épaisseurs 7, 8 de l'enveloppe gonflable 2, rabat qui, saillant de l'une des dites épaisseurs 7, 8, est replié autour du fil 18 et est fixé à lune ou aux deux épaisseurs 7, 8 par soudure ou couture étanche 21.

L'enveloppe gonflable 2 est ainsi suspendue au fil 18 de sorte que le bord d'attache 3 soit maintenu le long du fil 18.

Par ailleurs, la figure 3 représente un coussin gonflable 1 comportant tous les éléments de la réalisation de la figure 2 et comportant en outre une troisième patte de fixation 22. Cette patte de fixation 22 est en position centrale par rapport aux pattes de fixation 13 latérales, à mi-chemin sur le fil 18, entre les deux crochets 19.

La patte de fixation centrale 22 est formée de manière similaire aux pattes de fixation 13 : elle comporte deux languettes 14, 15 issues chacune d'une épaisseur 7, 8 de l'enveloppe gonflable, ces deux languettes étant reliées par un rivet perforé 16.

De même, le fil 18 passe entre les deux languettes 14, 15 de la patte de fixation centrale 22. De plus, pour une meilleure tenue du fil 18 par rapport à la patte de fixation centrale 22, une boucle définie par le fil 18 ou un anneau solidaire du fil 18 (non visible sur les figures) peut être prévu, cette boucle ou cet anneau étant disposé entre les languettes 14, 15 pour entourer le rivet 16 de la même manière que les crochets 19.

Les figures 4 et 5 montrent le coussin gonflable 1 des figures 1 et 2 monté dans l'habitacle d'une automobile, le dispositif de gonflage de ce coussin 1 ainsi que la conduite 11 auquel il doit être relié n'étant pas représentés pour des raisons de clarté.

La figure 4 représente le coussin gonflable 1 dans sa position d'attente. Celui-ci est disposé horizontalement, au-dessus du niveau des portes de l'automobile, et s'étend par sa longueur sur, de préférence, deux rangées de sièges. Lorsque le coussin 1 est en position déployée (figure 5), il protège ainsi à la fois les passagers avant et arrière du véhicule montré ici en exemple.

En pratique, le coussin gonflable 1 de la figure 4 peut être recouvert d'un revêtement de finition (qui n'a pas été représenté) destiné à le masquer. Dans un tel cas, ce revêtement, par exemple un panneau synthétique moulé, ne gênerait pas le déploiement de l'enveloppe gonflable tel qu'à la figure 5, par exemple par une ouverture appropriée ou par une aptitude au déchirement sous l'effet du gonflage.

Le coussin gonflable 1 est fixé à la coque de l'automobile par l'intermédiaire de moyens de fixation 23 insérés dans les trous 17 des rivets 16.

Ces moyens de fixation 23 peuvent être des vis, des rivets, des éléments clipsables ou tout autre élément permettant de maintenir les pattes de fixation 13, 22 contre un support rigide.

Cette fixation du coussin gonflable 1 par l'intermédiaire de ses pattes de fixation 13 peut se faire sans tension du fil 18, seule la rigidité intrinsèque de celui-ci assure alors le maintien du bord d'attache 3.

Alternativement, le coussin 1 est fixé de manière que le fil 18 présente une tension, par exemple en prévoyant des points d'attache sur le véhicule, destinés à recevoir les moyens de fixation 23 et espacés d'une distance supérieure à la distance séparant les centres des trous 17 dans les rivets 16. Le fil 18 est alors mis en tension lors du montage pendant lequel il sera nécessaire d'exercer une force tendant à éloigner les pattes de fixation latérales 13 l'une de l'autre.

Lorsque le coussin gonflable est en place tel que montré à la figure 1, avec ou sans tension du fil 18, les pattes de fixation 13 et les ourlets 20 permettent au bord d'attache 3 de rester solidaire du fil 18 maintenu rectiligne entre les deux moyens de fixation 23.

Le bord d'attache 3 peut de plus être fixé sur toute la longueur de l'habitacle au moyen d'une bande adhésive double face qui permet de prépositionner le coussin gonflable lors de son montage et qui assure un maintien supplémentaire.

Bien que la description des figures 4 et 5 se rapporte au coussin gonflable 1 de la figure 1 ou 2, elle peut de la même manière, être appliquée au coussin gonflable 1 de la figure 3 dont la patte de fixation supplémentaire 22 permet au fil de ne pas fléchir en son milieu, notamment dans le cas où le bord d'attache présente une longueur importante.

Des variantes de réalisation du coussin gonflable de sécurité et de son montage peuvent être envisagées sans pour autant sortir du cadre de l'invention. Notamment, le fil 18 peut être réalisé en un quelconque matériau, notamment polymère, présentant les propriétés physiques adaptées, de même qu'il peut être fait d'un seul brin, comme dans l'exemple décrit, ou de plusieurs brins à la manière d'un câble. En outre, la disposition et la longueur du coussin gonflable 1 peuvent être choisies pour ne s'étendre que sur une seule rangée de passagers, ou, à l'inverse, sur plus de deux rangées, par exemple dans un véhicule de type monospace. Egalement, les pattes de fixation 13, 22 peuvent être des pièces rapportées sur le bord d'attache 3 de même qu'elles peuvent se dispenser du rivet 16 si leur rigidité est suffisante.

## Revendications

1. Coussin gonflable (1) de sécurité pour automobiles, destiné à être fixé latéralement à l'intérieur de l'habitacle, au-dessus du niveau des portes de l'automobile (5), et comportant :
- une enveloppe gonflable (2) ;
- des pattes de fixation solidaires de l'enveloppe gonflable (2) et espacées sur un premier bord (3) du coussin gonflable (1), ce premier bord (3) comportant une première face destinée à être disposée contre la paroi de l'habitacle ;
ledit coussin gonflable (1) étant adapté à admettre une position d'attente dans laquelle l'enveloppe gonflable (2) n'est pas sous pression et est maintenue repliée au niveau de la fixation du coussin (1) à l'habitacle, et une position déployée dans laquelle l'enveloppe gonflable (2) est remplie d'un gaz et est déployée au moins partiellement le long des parois latérales internes de l'automobile (5),
ledit coussin gonflable (1) ayant :
- une première patte de fixation (13) et une deuxième patte de fixation (13), éloignées l'une de l'autre le long du premier bord (3) du coussin gonflable ;
- un fil (18) rattaché à la première et à la deuxième patte de fixation (13) et reliant lesdites pattes (13) entre-elles
ledit coussin gonflable (1) étant **caractérisé en ce que** le fil (18) comporte, au niveau de chaque patte de fixation (13), une portion rigide recourbée (19) adaptée à coopérer avec des moyens d'attache (23) du coussin (1) à l'habitacle de l'automobile (5).

2. Coussin gonflable selon la revendication 1, **caractérisé en ce que** les première patte (13) et deuxième patte (13) de fixation sont situées chacune respectivement à proximité d'une des extrémités du premier bord (3) du coussin gonflable (1).

3. Coussin gonflable selon l'une des revendications 1 ou 2, **caractérisé en ce qu'**au moins l'une desdites pattes de fixation (13)comporte un trou de fixation (17) adapté à recevoir des moyens d'attache (23) du coussin (1) à l'habitacle de l'automobile (5).

4. Coussin gonflable selon la revendication 3, **caractérisé en ce qu'**une extrémité (19) du fil (18) entoure un trou de fixation (17).

5. Coussin gonflable selon la revendication 3 ou 4, **caractérisé en ce que** le trou de fixation (17) d'au moins l'une desdites pattes de fixation (13) comporte un oeillet rigide (16) serti sur la patte de fixation (13) et disposé transversalement au fil (18).

6. Coussin gonflable selon l'une des revendications 1 à 5, **caractérisé en ce qu'**il comporte en outre une troisième patte de fixation (22) disposée entre ladite première patte de fixation (13) et ladite deuxième patte de fixation (13).

7. Coussin gonflable selon la revendication 6, **caractérisé en ce que** la troisième patte de fixation (22) est rattachée à l'enveloppe gonflable (2).

8. Coussin gonflable selon la revendication 6 ou 7, **caractérisé en ce que** la troisième patte de fixation (22) est rattachée au fil (18).

9. Coussin gonflable selon l'une des revendications 1 à 8, **caractérisé en ce qu'**il comporte en outre des moyens d'attache (20) dudit premier bord (3) de l'enveloppe gonflable (2) au fil (18).

10. Coussin gonflable selon la revendication 9, **caractérisé en ce que** lesdits moyens d'attache comportent au moins un ourlet (20) rattaché au premier bord (3) de l'enveloppe gonflable (2) et formant un passant dans lequel le fil (18) est inséré.

11. Coussin gonflable selon l'une des revendications 1 à 10, **caractérisé en ce que** la différence entre la longueur du fil (18) et l'écartement des pattes de fixation (13) est telle que le fil (18) est mis en tension lorsqu'il est fixé à l'habitacle par des moyens d'attache (23) du coussin (1) à l'habitacle.

12. Coussin gonflable selon la revendication 19, **caractérisé en ce que** le fil (18) présente une force de tension comprise entre 10 et 100 Newton.

13. Coussin gonflable selon l'une des revendications 1 à 12, **caractérisé en ce qu'**au moins une des pattes de fixation (13, 22) comporte une languette (14, 15) formée par une prolongation des parois (7, 8) de l'enveloppe gonflable (2).

14. Coussin gonflable selon la revendication 1 à 13, **caractérisé en ce que** l'enveloppe gonflable (2) comporte deux épaisseurs (7, 8) superposées formant les parois de l'enveloppe (2) et **en ce que** chacune de ces épaisseurs (7, 8) comporte au moins une excroissance latérale (14, 15), au moins l'une des pattes de fixation (13, 22) étant formée par la superposition de deux de ces excroissances (14, 15) appartenant respectivement à chacune desdites épaisseurs (7, 8).

15. Coussin gonflable selon la revendication 14, **caractérisé en ce que** lesdites excroissances (14, 15) superposées sont serties par un oeillet (16) comportant en son centre un trou de fixation (17).

16. Coussin gonflable selon la revendication 15, **caractérisé en ce que** le fil (18) coopère à chacune de ses extrémités (19), en étant disposé entre lesdites excroissances (14, 15) superposées, avec ledit oeillet (16).

17. Coussin gonflable selon l'une des revendications 1 à 16, **caractérisé en ce qu'**il comporte de plus, le long de la première face dudit premier bord (3), un adhésif destiné à former une fixation supplémentaire à l'automobile (5).

18. Coussin gonflable selon l'une des revendications 1 à 17, **caractérisé en ce que** ledit fil (18) est constitué d'une barre d'acier.

19. Coussin gonflable selon l'une des revendications 1 à 18, **caractérisé en ce que** ledit fil (18) est constitué d'un câble.

## Claims

1. Safety airbag (1) for automotive vehicles, designed to be laterally mounted to the interior of the passenger compartment, above the doors of the automotive vehicle (5), and comprising:
- an inflatable curtain (2);
- mounting brackets integral with the inflatable curtain (2) and spaced apart along a first edge (3) of the airbag (1), this first edge (3) comprising a first surface designed to be disposed against the passenger compartment wall;
said airbag (1) being adapted to allow a ready position wherein the inflatable curtain (2) is not pressurised and is maintained folded at the passenger compartment airbag (1) mounting, and a deployed position wherein the inflatable curtain (2) is filled with a gas and is deployed at least partially along the internal side walls of the automotive vehicle (5),
said airbag (1) having:
- a first mounting bracket (13) and a second mounting bracket (13), spaced apart from each other along the first edge (3) of the airbag;
- a wire (18) attached to the first and the second mounting bracket (13) and linking said brackets (13) with each other,
said airbag (1) being **characterised in that** the wire (18) comprises, at each mounting bracket (13), a rigid curved portion (19) adapted to cooperate with the attachment means (23) of the airbag (1) to the passenger compartment of the automotive vehicle (5).

2. Airbag according to claim 1, **characterised in that** the first mounting bracket (13) and the second mounting bracket (13) are each located close to one of the ends of the first edge (3) of the airbag (1).

3. Airbag according to claim 1 or claim 2, **characterised in that** at least one of the said mounting brackets (13) comprises a mounting hole (17) adapted to receive the attachment means (23) of the airbag (1) to the passenger compartment of the automotive vehicle (5).

4. Airbag according to claim 3, **characterised in that** one end (19) of the wire (18) surrounds a mounting hole (17).

5. Airbag according to claim 3 or claim 4, **characterised in that** the mounting hole (17) of at least one of said mounting brackets (13) comprises a rigid eyelet (16) crimped to the mounting bracket (13) and disposed transversally to the wire (18).

6. Airbag according to any one of claims 1 to 5, **characterised in that** it further comprises a third mounting bracket (22) disposed between said first mounting bracket (13) and said second mounting bracket (13).

7. Airbag according to claim 6, **characterised in that** the third mounting bracket (22) is attached to the inflatable curtain (2).

8. Airbag according to claim 6 or claim 7, **characterised in that** the third mounting bracket (22) is attached to the wire (18).

9. Airbag according to any one of claims 1 to 8, **characterised in that** it further comprises attachment means (20) of said first edge (3) of the inflatable curtain (2) to the wire (18).

10. Airbag according to claim 9, **characterised in that** said attachment means comprise at least one hem (20) attached to the first edge (3) of the inflatable curtain (2) and forming a loop into which the wire (18) is inserted.

11. Airbag according to any one of claims 1 to 10, **characterised in that** the difference between the length of the wire (18) and the spacing of the mounting brackets (13) is such that the wire (18) is tensioned when it is fastened to the passenger compartment using the airbag (1) passenger compartment attachment means (23).

12. Airbag according to claim 11, **characterised in that** the wire (18) presents a tension force in the range between 10 and 100 Newtons.

13. Airbag according to any one of claims 1 to 12, **characterised in that** at least one of the mounting brackets (13, 22) comprises a tab (14, 15) formed by an extension of the walls (7, 8) of the inflatable curtain (2).

14. Airbag according to any one of claims 1 to 13, **characterised in that** the inflatable curtain (2) comprises two superimposed layers (7, 8) forming the curtain (2) walls and **in that** each of these layers (7, 8) comprises at least one lateral protuberance (14, 15), at least one of the mounting brackets (13, 22) being formed by the superimposition of two of these protuberances (14, 15) respectively belonging to each of said layers (7, 8).

15. Airbag according to claim 14, **characterised in that** the said superimposed protuberances (14, 15) are crimped by an eyelet (16) comprising a mounting hole (17) at its centre.

16. Airbag according to claim 15, **characterised in that** the wire (18) cooperates at each one of its ends (19), disposed between said superimposed protuberances (14, 15), with said eyelet (16).

17. Airbag according to any one of claims 1 to 16, **characterised in that** it further comprises, along the first surface of said first edge (3), an adhesive designed to form an additional fastening to the automotive vehicle (5).

18. Airbag according to any one of claims 1 to 17, **characterised in that** said wire (18) is constituted by a steel bar.

19. Airbag according to any one of claims 1 to 18, **characterised in that** said wire (18) is constituted by a cable.

## Patentansprüche

1. Aufblasbarer Sicherheitsairbag (1) für Kraftfahrzeuge, der so gestaltet ist, dass er lateral im Innern des Fahrgastraums über den Türen des Kraftfahrzeugs (5) befestigt werden kann, und der Folgendes umfasst:
- einen aufblasbaren Vorhang (2);
- Befestigungslaschen einstückig mit dem aufblasbaren Vorhang (2) und an einem ersten Rand (3) des Airbags (1) beabstandet, wobei dieser erste Rand (3) eine erste Fläche aufweist, die zum Anordnen an der Wand des Fahrgastraums gestaltet ist;
wobei der Airbag (1) so gestaltet ist, dass er eine Bereitschaftsposition, in der der aufblasbare Vorhang (2) nicht unter Druck ist und an der Fahrgastraumbefestigung des Airbags (1) gefaltet gehalten wird, und eine Entfaltungsposition einnehmen kann, in der der aufblasbare Vorhang (2) mit einem Gas gefüllt und wenigstens teilweise entlang den inneren Seitenwänden des Kraftfahrzeugs (5) entfaltet wird,
wobei der Airbag (1) Folgendes beinhaltet:
- eine erste Befestigungslasche (13) und eine zweite Befestigungslasche (13), die entlang dem ersten Rand (3) des Airbags voneinander beabstandet sind;
- einen Draht (18), der an der ersten und der zweiten Befestigungslasche (13) angebracht ist und die Laschen (13) untereinander verbindet,
wobei der Airbag (1) **dadurch gekennzeichnet ist, dass** der Draht (18) an jeder Befestigungslasche (13) einen starren gekrümmten Abschnitt (19) aufweist, der so gestaltet ist, dass er mit Anbringungsmitteln (23) des Airbags (1) am Fahrgastraum des Kraftfahrzeugs (5) zusammenwirkt.

2. Airbag nach Anspruch 1, **dadurch gekennzeichnet, dass** sich die erste Befestigungslasche (13) und die zweite Befestigungslasche (13) jeweils in der Nähe von einem der Enden des ersten Randes (3) des Airbags (1) befinden.

3. Airbag nach Anspruch 1 oder 2, **dadurch gekennzeichnet, dass** wenigstens eine der Befestigungslaschen (13) ein Befestigungsloch (17) zum Aufnehmen von Anbringungsmitteln (23) des Airbags (1) am Fahrgastraum des Kraftfahrzeugs (5) aufweist.

4. Airbag nach Anspruch 3, **dadurch gekennzeichnet, dass** ein Ende (19) des Drahtes (18) ein Befestigungsloch (17) umgibt.

5. Airbag nach Anspruch 3 oder 4, **dadurch gekennzeichnet, dass** das Befestigungsloch (17) von wenigstens einer der Befestigungslaschen (13) eine starre Öse (16) aufweist, die auf die Befestigungslasche (13) geklemmt und transversal zu dem Draht (18) angeordnet ist.

6. Airbag nach einem der Ansprüche 1 bis 5, **dadurch gekennzeichnet, dass** er ferner eine dritte Befestigungslasche (22) aufweist, die zwischen der ersten Befestigungslasche (13) und der zweiten Befestigungslasche (13) angeordnet ist.

7. Airbag nach Anspruch 6, **dadurch gekennzeichnet, dass** die dritte Befestigungslasche (22) an dem aufblasbaren Vorhang (2) angebracht ist.

8. Airbag nach Anspruch 6 oder 7, **dadurch gekennzeichnet, dass** die dritte Befestigungslasche (22) an dem Draht (18) angebracht ist.

9. Airbag nach einem der Ansprüche 1 bis 8, **dadurch gekennzeichnet, dass** er ferner Anbringungsmittel (20) des ersten Randes (3) des aufblasbaren Vorhangs (2) an dem Draht (18) aufweist.

10. Airbag nach Anspruch 9, **dadurch gekennzeichnet, dass** die Anbringungsmittel wenigstens einen Saum (20) aufweisen, der am ersten Rand (3) des aufblasbaren Vorhangs (2) angebracht ist und eine Schlaufe bildet, in die der Draht (18) eingeführt wird.

11. Airbag nach einem der Ansprüche 1 bis 10, **dadurch gekennzeichnet, dass** die Differenz zwischen der Länge des Drahtes (18) und dem Abstand der Befestigungslaschen (13) derart ist, dass der Draht (18) gespannt wird, wenn er mit den Fahrgastraumanbringungsmitteln (23) des Airbags (1) im Fahrgastraum befestigt wird.

12. Airbag nach Anspruch 11, **dadurch gekennzeichnet, dass** der Draht (18) eine Spannkraft zwischen 10 und 100 Newton aufweist.

13. Airbag nach einem der Ansprüche 1 bis 12, **dadurch gekennzeichnet, dass** wenigstens eine der Befestigungslaschen (13, 22) eine Zunge (14, 15) aufweist, die von einer Verlängerung von Wänden (7, 8) des aufblasbaren Vorhangs (2) gebildet wird.

14. Airbag nach einem der Ansprüche 1 bis 13, **dadurch gekennzeichnet, dass** der aufblasbare Vorhang (2) zwei übereinander liegende Lagen (7, 8) aufweist, die die Wände des Vorhangs (2) bilden, und **dadurch**, dass jede dieser Lagen (7, 8) wenigstens eine laterale Ausstülpung (14, 15) aufweist, wobei wenigstens eine der Befestigungslaschen (13, 22) durch die Übereinanderlage von zwei dieser Ausstülpungen (14, 15) gebildet wird, die jeweils zu den einzelnen Lagen (7, 8) gehören.

15. Airbag nach Anspruch 14, **dadurch gekennzeichnet, dass** die übereinander liegenden Ausstülpungen (14, 15) durch eine Öse (16) zusammengeklemmt werden, die in ihrer Mitte ein Befestigungsloch (17) aufweist.

16. Airbag nach Anspruch 15, **dadurch gekennzeichnet, dass** der Draht (18) an jedem seiner Enden (19) zwischen den übereinander liegenden Ausstülpungen (14, 15) angeordnet mit der Öse (16) zusammenwirkt.

17. Airbag nach einem der Ansprüche 1 bis 16, **dadurch gekennzeichnet, dass** er außerdem entlang der ersten Fläche des ersten Randes (3) einen Klebstoff aufweist, dessen Aufgabe es ist, eine zusätzliche Befestigung am Kraftfahrzeug (5) zu bilden.

18. Airbag nach einem der Ansprüche 1 bis 17, **dadurch gekennzeichnet, dass** der Draht (18) von einem Stahlstab gebildet wird.

19. Airbag nach einem der Ansprüche 1 bis 18, **dadurch gekennzeichnet, dass** der Draht (18) von einem Kabel gebildet wird.
